# EUROPEAN PATENT SPECIFICATION

(11) **EP 4 269 474 B1**
(45) Date of publication and mention of the grant of the patent: **11.12.2024**
(21) Application number: 23170304.2
(22) Date of filing: 27.04.2023
(51) Int. Cl.: C08L 23/04, B29K 23/00, B29L 7/00, C08J 3/12, C08K 3/26, B29B 17/00, C08L 95/00

(54) **PROCESS FOR PRODUCING TPE-O AND TPE-O THUS OBTAINED**
VERFAHREN ZUR HERSTELLUNG VON TPE-O UND DAMIT ERHALTENES TPE-O
PROCÉDÉ DE PRODUCTION DE TPE-O ET TPE-O AINSI OBTENU

(30) Priority: 28.04.2022 IT 202200008390
(43) Date of publication of application: 01.11.2023
(73) Proprietor: SERMAG S.r.l., 20124 Milano (IT)
(72) Inventor: ROSMINO, Andrea, 16146 Genova (IT)
(74) Representative: Aseglio-Gianinet, Romina

(56) References cited:
- EP-A1- 2 687 367
- EP-A1- 3 783 050

## Description

This invention refers to the sector of thermoplastic elastomers (TPE), in particular of an olefinic nature (TPE-O).

As is known, thermoplastic elastomers combine the workability and recyclability properties of thermoplastic materials with many of the physical properties of thermosetting rubbers, such as elasticity, low permanent compression deformation and high flexibility.

In particular, TPEs may be described as two-phase materials, consisting of a rubbery elastomeric component and a rigid thermoplastic component. The elastomeric phase results in properties similar to those of rubber, such as elasticity, softness, flexibility, low permanent compression deformation and low use temperature, while the thermoplastic phase has properties similar to those of a usual thermoplastic polymer, such as hardness, workability, recyclability and high use temperature.

EP 3 783 050 A1 discloses a process for the production of TPE-O.

An object of this invention is to provide improved TPE-Os relative to those of the prior art.

According to the invention, this object is achieved by a process for producing an olefinic thermoplastic elastomer, comprising the successive steps of:
- feeding 100 parts by weight of LDPE and/or LLDPE to a mouth of a cavity open at the top of a densifying apparatus, which is delimited by a casing and within which a blade is rotatably mounted about a vertical axis and subjects the LDPE and/or LLDPE to a shear stress, heating it to a temperature between 130 and 150 °C at which said LDPE and/or LLDPE melts,
- feeding into said cavity 33 to 54 parts by weight of atactic polypropylene copolymer in which the percentage by weight of ethylene units is between 35 and 45% and which is mixed with the LDPE and/or LLDPE to form a composite melt,
- feeding into said cavity water at a temperature not exceeding 25 °C, which brings about the solidification of said composite melt that is shredded by said blade into granules not exceeding 14 mm in size, and
- loading said granules into an inlet end of a single-screw extruder, from which said thermoplastic elastomer is extruded through an outlet die.

The process of the invention provides for a single "densification" step for the preparation of the composite material to be extruded, with a considerable saving of energy and labor compared to conventional processes in which the different ingredients of the composite material to be extruded, in particular PE and PP, are prepared separately.

The "densification" step of the process of the invention produces an excellent homogenization of PE and PP, which allows the subsequent extrusion step to be carried out by means of a single-screw extruder. In this way, the high stresses imparted to the treated material by the co-rotating twin-screw extruders used according to the prior art are avoided, with an improvement in the properties of the extruded thermoplastic elastomer.

Advantageously, the LDPE and/or LLDPE used in the process of the invention is, partially or totally, a pre- or post-consumer recycled material, a byproduct and/or a secondary raw material, and may for example derive from packaging film.

In preferred embodiments of the process of the invention, the LDPE and/or LLDPE, if in the form of pressed bales or bobbins, is shredded by a guillotine positioned on a first horizontal conveyor belt and loaded onto a second inclined conveyor belt feeding to the upper mouth of said densifying apparatus, or, if in granular form, is loaded directly onto said second inclined conveyor belt.

Advantageously, the process of the invention uses a single-screw extruder which has a ratio of length to outer diameter of the screw between 37 and 40, in particular 37, and is operated with a rotation speed of the screw between 120 and 150 rpm.

A further object of this invention is a thermoplastic elastomer obtainable by carrying out the process described above, the thermoplastic elastomer of which may in particular be used for the production of bitumen-based waterproofing membranes.

The thermoplastic elastomer of the invention, once added to the bitumen, modifies its properties as if its components had been added separately. In this way, the bitumen feeding and modification system is optimized and speeded up, also making it possible to comply with the safety regulations which provide for the addition of additives in a single solution.

Therefore, a further object of the present invention is constituted by a waterproofing membrane consisting of 50 to 55% by weight of bitumen, 12 to 15% by weight of the thermoplastic elastomer obtainable with the process of the invention and 38 to 30% by weight of calcium carbonate. It should be noted that the sum of the percentages of the ingredients selected within the aforementioned intervals should be equal to 100%.

It has been found that, in the bituminous membranes of the invention, the modification of the bitumen deriving from the use of the thermoplastic elastomer of the invention allows values of cold flexibility (measured according to the UNI EN 1109 standard), penetration resistance (measured according to the ASTM D5 standard) and ring and ball (measured according to the ASTM D36 standard) to be obtained that are fully satisfactory for the usual requirements of use.

It should also be noted that the use of byproducts and partially or totally recycled products in the production of the thermoplastic elastomer of the invention allows the cost of the waterproofing membranes which use it to be significantly reduced.

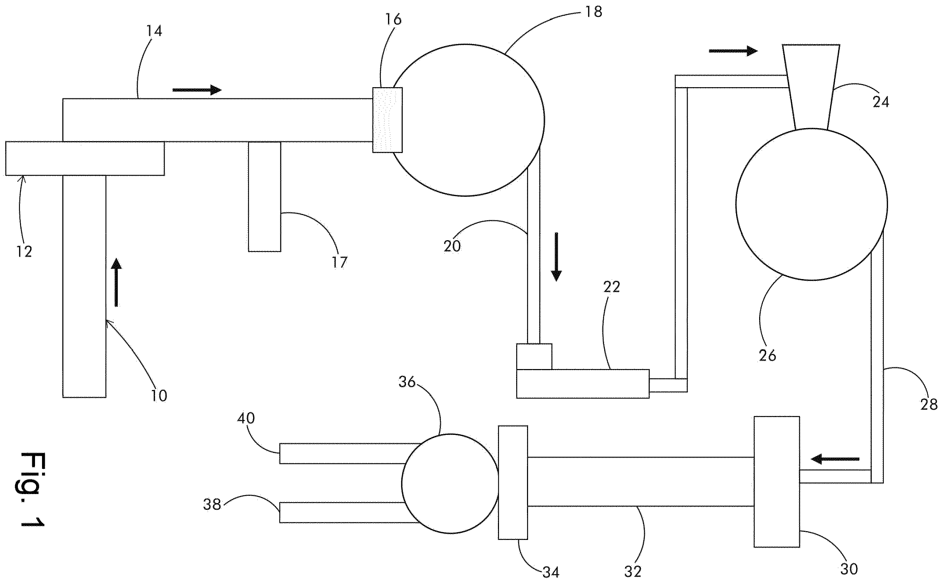

Further advantages and features of this invention will become apparent from the following detailed description, given by way of non-limiting example with reference to the accompanying drawings, wherein:
the single figure is a schematic view of a plant for carrying out the process of the invention.

In this single figure, the reference numeral 10 indicates a first horizontal conveyor belt for LDPE and/or LLDPE film in the form of pressed bales or bobbins, at the end of which a shredding guillotine 12 is located. Downstream of the latter, a second inclined conveyor belt 14 is placed for feeding to an upper mouth 16 of a conventional densifying apparatus 18 which - as is known - has an internal cavity open at the top, which is delimited by a casing and within which a blade rotating around a vertical axis is mounted. Furthermore, an Archimedean screw 17 allows, if necessary, material already in granular form to be unloaded directly onto the second inclined conveyor belt 14 for feeding the densifying apparatus 18.

A discharge duct 20 of the densifying apparatus 18, on which a first fan 22 is positioned, leads to a cyclone 24 and a mixing silo 26. An outlet duct 28 of the mixing silo 26 leads to an inlet opening 30 of a per se conventional single-screw extruder 32.

Downstream of the extruder 32 there are arranged a second fan 34, a further mixing silo 36 and Archimedean screws 38, 40 for feeding respectively a bagging machine of weighing units of the order of 25 kg and a packaging machine for so-called "big bags" of larger dimensions, thus allowing the most appropriate packaging to be chosen according to needs.

A specific, non-limiting example of a process for the production of a thermoplastic elastomer of an olefinic nature, carried out using the plant just described, is now described.

135 kg of LDPE film in the form of pressed bales or bobbins are shredded by the guillotine 12 positioned on the first horizontal conveyor belt 10 and sent to the feed mouth 16 of the densifying apparatus 18 by the second inclined conveyor belt 14.

The shredded LDPE thus falls into the cavity of the densifying apparatus 18, where, by virtue of the rotation of the relevant blade, it is heated to 120 °C by mechanical cutting action and is transformed into semi-melted pre-granules of about 12-14 mm in size.

Before the end of the heating step, 45 kg of atactic PP copolymer in which the percentage by weight of ethylene units is equal to about 39% (which corresponds to a molar ratio between ethylene and propylene units equal to 1:0.94) and which was previously reduced into strips of variable mass between 1 and 3 kg are added to the densifying apparatus 18.

The atactic PP copolymer, which has a very low softening point (about 60 °C), once placed in contact with LDPE at 120 °C, melts substantially immediately, amalgamating and homogenizing with the LDPE pre-granules within about 4 minutes.

This melting and homogenization step is interrupted by the addition of 40 kg of water at room temperature into the cavity of the densifying apparatus 18, which water, upon contact with the hot material present therein, totally evaporates and at the same time causes it to crystallize. Subsequently, the blade of the densifying apparatus 18, which continues to rotate, cuts the crystallized material, thus reducing it into granules of variable size between 12 and 14 mm.

The granules are then discharged into the mixing silo 26 where they cool down to 60 °C to then be directed to the inlet opening 30 of the single-screw extruder 32 having an LID ratio equal to 37, and operating at a temperature of 180 °C and a rotation speed of 150 rpm.

During the extrusion step, 10 kg of HDPE are added in ground or granule form with an MFI (melt flow index) between 5 and 15 g/10 minutes, measured according to the EN ISO 1133 standard.

190 kg of thermoplastic elastomer are extruded from an exit die of the extruder 32, the granules of which are then conveyed by the fan 34 to the mixing silo 36 to homogenize the product obtained and from there, again by the Archimedean screw 40, to an automatic bagging machine for packaging in 25 kg weight bags.

The thermoplastic elastomer thus obtained has an MFI (melt flow index) value according to the EN ISO 1133 standard which is between 3.8 and 4.2 g/10 minutes, i.e. much higher than between 2.8 and 3.2 g/10 minutes of the thermoplastic elastomer obtainable with the process described by EP 3 783 050 A1.

Furthermore, the thermoplastic elastomer of the invention has a rotational viscosity (measured according to the ASTM D4402 standard) about 40% lower than that of the thermoplastic elastomer obtainable with the process described by EP 3 783 050 A1. This reduction in viscosity makes it possible to significantly increase the productivity of a production line fed with the thermoplastic elastomer of the invention.

The benefits conferred by the advantageous properties highlighted above of the thermoplastic elastomer obtained according to the present invention are reflected in waterproofing membranes produced using for example 80/20 mixtures (ratio by weight of standard 160-220 bitumen /thermoplastic elastomer).

Naturally, without prejudice to the principle of the invention, the details of implementation and the embodiments may vary widely with respect to that which has been described purely by way of example, without thereby departing from the scope of the invention as defined in the appended claims. For example, in the densifying apparatus and/or in the extruder used in the process of the invention, in addition to the materials described above, all the additives conventionally used in the processing of plastics and elastomeric materials may be loaded, such as stabilizers, dyes, flame retardants, plasticizers, fillers, etc.

## Claims

1. Process for producing an olefinic thermoplastic elastomer, comprising the successive steps of:
- feeding 100 parts by weight of LDPE and/or LLDPE to a mouth of a cavity open at the top of a densifying apparatus, which is delimited by a casing and within which a blade is rotatably mounted about a vertical axis and subjects the LDPE and/or LLDPE to a shear stress, heating it to a temperature between 130 and 150 °C at which said LDPE and/or LLDPE melts,
- feeding into said cavity 33 to 54 parts by weight of atactic polypropylene copolymer in which the percentage by weight of ethylene units is between 35 and 45% and which is mixed with the LDPE and/or LLDPE to form a composite melt,
- feeding into said cavity water at a temperature not exceeding 25 °C, which brings about the solidification of said composite melt that is shredded by said blade into granules not exceeding 14 mm in size, and
- loading said granules into an inlet end of a single-screw extruder, from which said thermoplastic elastomer is extruded through an outlet die.

2. Process according to claim 1, wherein said LDPE and/or LLDPE is, partially or wholly, a pre- or post-consumer recycled material, a byproduct and/or a secondary raw material.

3. Process according to any one of the preceding claims, wherein said LDPE and/or LLDPE, if in the form of pressed bales or bobbins, is shredded by a guillotine positioned on a first horizontal conveyor belt and loaded onto a second inclined conveyor belt feeding to the mouth of said densifying apparatus, and/or, if in granular form, is loaded directly onto said second inclined conveyor belt.

4. Process according to claim 3, wherein said LDPE and/or LLDPE is derived from packaging film.

5. Process according to any one of the preceding claims, wherein 2.75 to 5.60 parts by weight of HDPE per 100 parts by weight of said granules are further added into said single-screw extruder.

6. Process according to any one of the preceding claims, wherein said single-screw extruder has a screw rotating at a speed between 120 and 150 rpm.

7. Process according to any one of the preceding claims, wherein said single-screw extruder has a ratio of length to outer diameter of the screw between 37 and 40, in particular 37.

8. Thermoplastic elastomer obtainable by carrying out a process according to any one of the preceding claims.

9. Waterproofing membrane consisting of 50 to 55% by weight of bitumen, 12 to 15% by weight of thermoplastic elastomer according to claim 8, and 38 to 30% by weight of calcium carbonate.

## Patentansprüche

1. Verfahren zum Herstellen eines olefinischen thermoplastischen Elastomers, aufweisend die folgenden aufeinanderfolgenden Schritte:
- Einspeisen von 100 Gewichtsanteilen an LDPE und/oder LLDPE in eine Mündung eines nach oben offenen Hohlraums einer Verdichtungsvorrichtung, welcher durch ein Gehäuse begrenzt ist und in welchem eine Schneide drehbar um eine vertikale Achse angebracht ist und das LDPE und/oder das LLDPE einer Scherbeanspruchung aussetzt, wobei es auf eine Temperatur zwischen 130 und 150°C erhitzt wird, bei welcher das LDPE und/oder das LLDPE schmelzen/schmilzt,
- Einspeisen, in den Hohlraum, von 33 bis 54 Gewichtsanteilen an ataktischem Polypropylen-Copolymer, bei welchem der Gewichtsprozentsatz an Ethyleneinheiten zwischen 35 und 45% beträgt und welches mit dem LDPE und/oder dem LLDPE gemischt wird, um eine Verbundschmelze zu erzeugen,
- Einspeisen von Wasser in den Hohlraum bei einer 25°C nicht übersteigenden Temperatur, wodurch die Verfestigung der Verbundschmelze erreicht wird, welche von der Schneide in Granulat, welches 14 mm an Größe nicht übersteigt, zerkleinert wird, und
- Einbringen des Granulats in ein Einlassende eines Einschneckenextruders, von welchem das thermoplastische Elastomer durch eine Auslassdüse extrudiert wird.

2. Verfahren nach Anspruch 1, wobei das LDPE und/oder das LLDPE teilweise oder vollständig ein recyceltes Prä- oder Postverbrauchsmaterial, ein Nebenprodukt und/oder ein Sekundärrohstoff sind/ist.

3. Verfahren nach einem der vorangehenden Ansprüche, wobei das LDPE und/oder das LLDPE, falls in Form von gepressten Ballen oder Spulen, von einer auf einem ersten horizontalen Fließband angeordneten Schneidemaschine zerkleinert wird/werden und auf ein zweites geneigtes Fließband verladen wird/werden, welches es in die Mündung der Verdichtungsvorrichtung einspeist, und/oder, falls in Granulatform, direkt auf das zweite geneigte Fließband geladen wird.

4. Verfahren nach Anspruch 3, wobei das LDPE und/oder das LLDPE aus Verpackungsfolien gewonnen sind/ist.

5. Verfahren nach einem der vorangehenden Ansprüche, wobei dem Einschneckenextruder weiter 2,75 bis 5,60 Gewichtsteile an HDPE pro 100 Gewichtsteilen des Granulats zugeführt werden.

6. Verfahren nach einem der vorangehenden Ansprüche, wobei der Einschneckenextruder eine Schnecke aufweist, die mit einer Geschwindigkeit zwischen 120 und 150 Umdrehungen pro Minute rotiert.

7. Verfahren nach einem der vorangehenden Ansprüche, wobei der Einschneckenextruder ein Verhältnis von Länge zu Außendurchmesser der Schnecke zwischen 37 und 40, bevorzugt 37 aufweist.

8. Thermoplastisches Elastomer, erhältlich durch Ausführen eines Verfahrens nach einem der vorangehenden Ansprüche.

9. Wasserfeste Membran bestehend aus 50 bis 55 Gewichtsprozent an Bitumen, 12 bis 15 Gewichtsprozent an thermoplastischem Elastomer nach Anspruch 8 und 38 bis 30 Gewichtsprozent an Kaliziumkarbonat.

## Revendications

1. Procédé de production d'un élastomère thermoplastique oléfinique, comprenant les étapes successives consistant à :
- introduire 100 parties en poids de LDPE et/ou de LLDPE dans une embouchure d'une cavité ouverte au sommet d'un appareil de densification, qui est délimité par un carter et à l'intérieur duquel une lame est montée rotative autour d'un axe vertical et soumettre le LDPE et/ou le LLDPE à une contrainte de cisaillement, en le(s) chauffant à une température entre 130 et 150 °C à laquelle ledit LDPE et/ou LLDPE fond,
- introduire dans ladite cavité 33 à 54 parties en poids d'un copolymère de polypropylène atactique dans lequel le pourcentage en poids de motifs éthylène est entre 35 et 45 % et qui est mélangé avec le LDPE et/ou le LLDPE pour former une masse fondue composite,
- introduire dans ladite cavité de l'eau à une température ne dépassant pas 25 °C, ce qui provoque la solidification de ladite masse fondue composite qui est déchiquetée par ladite lame en granulés d'une taille ne dépassant pas 14 mm, et
- charger lesdits granulés dans une extrémité d'entrée d'une extrudeuse monovis, à partir de laquelle ledit élastomère thermoplastique est extrudé à travers une filière de sortie.

2. Procédé selon la revendication 1, dans lequel lesdits LDPE et/ou LLDPE sont, partiellement ou totalement, un matériau recyclé pré- ou post-consommation, un sous-produit et/ou une matière première secondaire.

3. Procédé selon l'une quelconque des revendications précédentes, dans lequel lesdits LDPE et/ou LLDPE, s'ils se présentent sous la forme de balles ou de bobines pressées, sont déchiquetés par une guillotine positionnée sur une première bande transporteuse horizontale et chargés sur une seconde bande transporteuse inclinée alimentant l'embouchure dudit appareil de densification et/ou, s'ils se présentent sous forme de granulés, sont chargés directement sur ladite seconde bande transporteuse inclinée.

4. Procédé selon la revendication 3, dans lequel lesdits LDPE et/ou LLDPE sont dérivés d'un film d'emballage.

5. Procédé selon l'une quelconque des revendications précédentes, dans lequel 2,75 à 5,60 parties en poids de HDPE pour 100 parties en poids desdits granulés sont en outre ajoutées dans ladite extrudeuse monovis.

6. Procédé selon l'une quelconque des revendications précédentes, dans lequel ladite extrudeuse monovis comporte une vis tournant à une vitesse entre 120 et 150 tr/min.

7. Procédé selon l'une quelconque des revendications précédentes, dans lequel ladite extrudeuse monovis présente un rapport longueur sur diamètre externe de la vis entre 37 et 40, en particulier de 37.

8. Élastomère thermoplastique pouvant être obtenu par la mise en oeuvre d'un procédé selon l'une quelconque des revendications précédentes.

9. Membrane d'étanchéité consistant en 50 à 55 % en poids de bitume, 12 à 15 % en poids d'élastomère thermoplastique selon la revendication 8, et 38 à 30 % en poids de carbonate de calcium.
